# EUROPEAN PATENT SPECIFICATION

(11) **EP 0 303 723 B1**
(45) Date of publication and mention of the grant of the patent: **10.11.1993**
(21) Application number: 87111991.3
(22) Date of filing: 18.08.1987
(51) Int. Cl.: B65B 13/34

(54) **Binding tool**
Werkzeug zum Binden
Outil de cerclage

(43) Date of publication of application: 22.02.1989
(73) Proprietor: NIREI INDUSTRY CO. LTD., Mitaka-shi Tokyo 181 (JP)
(72) Inventor: Hidaka, Tomoharu, Higashimurayama-shi, Tokyo 189 (JP); Sirakawa, Yuji, Musashimurayama-shi, Tokyo 190-12 (JP)
(74) Representative: Sperling, Rüdiger, Dipl.-Ing.

(56) References cited:
- US-A- 3 570 554
- US-A- 3 633 633

## Description

### BACKGROUND OF THE INVENTION

### 1. Field of the Invention

The present invention relates to a binding tool for tying up electric wires or the like in a bundle by use of a band and a small square-sectioned fastener.

### 2. Description of the Prior Art

Conventionally known as a binding tool of this kind is such as disclosed in Japanese Patent Publication No. 36680/76. This conventional binding tool has an arrangement in which a plurality of inter-connected fasteners and a band are fed to front end portion of the tool, the band is manually wound around electric wires or the like tightly and inserted through the foremost fastener, the end portion of the band is inserted again into the fastener and fastened thereto, and the band and the fastener are cut by a handle manipulation. In this binding tool, since the fasteners are interconnected in a direction perpendicular to the direction of the through hole of each fastener, it is necessary that the fastener feed path in the tool be provided at right angles to an open end of the band path at the front end of the tool.

However, the binding tool of such a structure is not convenient for the binding work because its bulky front end portion hinders visual verification of the binding work. Furthermore, such a binding tool is not easy to handle when the binding work takes place in a narrow space.

Moreover, the fastener for use in this binding tool is such as shown in the above-mentioned Japanese patent publication, but it is readily deformed by external force. Accordingly, there is the possibility that the engagement of the fastener with the band becomes unstable, resulting in the band slipping out of the fastener.

### SUMMARY OF THE INVENTION

In US-PS 3 570 554 there is disclosed a manually operated strapping apparatus having a magazine which is pivotable between two positions, the first postion being the tool operation position in which the fastener is wound around the bundle of wires and in which operation situation the fastener feed path being constructed in the magazine channel is pivoted back into a rest position. In this rest position the magazine is spread apart from the tool in an angle of about 45°. After the operation of bundeling is finished and the fastener band cut, the magazine is pivoted into a loading position, where the magazine channel is aligned with the feeding channel for the band.

US-PS 3 633 633 discloses an apparatus for applying a plastic strap around a bundle of electrical conductors. The strap is feed by an pneumatic feed mechanism to a jaw-construction which surrounds the bundle of wires. The jaw-construction is split into two jaw-sections, one of these jaw-sections is pivotable to open the jaw and to accommodate the bundle of wires. The fasteners, which are stored in a magazine channel are urged by means of a spring into the working position, i.e. the position in which the band is able to pass through respective openings in the fastener.

The magazine channel is divided into two portions, the first portion running parallel to the band feeding path and the second portion being directed vertically upwards to meet the band feeding path.

This known apparatus has some inconveniences. First the numbers or the size of the bundle of wires is limited to the size of the opening of the jaws. Further storing the fasteners needs to bring the fastener into a laying position in order to have them in an up right position when they are fed vertically into the working position. Further the working operation is possible only by means of a pneumatic system.

The object of the present invention is to provide a binding tool which has a small sice and being independent from any kind of power lines an which is easily operatable and controllable.

This task is solved by a binding tool comprising:
- a tool body; and a band case containing a roll of band; wherein the tool body has formed therein in parallel and in the same direction a band passage through which the band is passed and a fastener feed path in which a plurality of fasteners loaded thereinto from the rear open end thereof are contained in alignment;
- wherein the front face of the tool body has formed therein an opening of a size large enough to permit the passage of the fastener therethrough; an a front open end of the band passage, said openings being flush with each other
- wherein a working head comprising a fastener holding portion communicating with the opening of the fastener feed path is provided in opposing relation to the front face of the tool body, the working head being movable between a first position where the fastener holding portion is aligned with the front open end of the fastener feed path and the working head holds in its fastener holding portion the fastened fed, out of the front end portion of the fastener feed path and a second position where the fastener held in the fastener holding portion is aligend with the front open end of the band passage, said working head has an opening in its front wall.
- wherein a cutter is disposed in the vicinity of the working head, the cutter being movable across the front open end of the band passage in association with the working head when the latter moves from the second position to the first position.

### BRIEF DESCRIPTION OF THE DRAWINGS

Fig. 1 is a perspective view illustrating the binding tool of thepresent invention;
Fig. 2 is its enlarged sectional view;
Fig. 3(a) and (b) are a perspective view and a sectional view of a fastener for use with the binding tool of the present invention;
Fig. 4(a) is a plan view of fastener loading means;
Fig. 4(b) is a cross-sectional view taken on the line X-X in Fig. 4(a);
Fig. 5 is a schematic diagram for explaining the loading of fasteners into the fool body by the fastener loading means;
Fig. 6 is a schematic diagram for explaining how fastener push means is mounted in the tool body; and
Fig. 7(a), (b), (c), (d) and (e) are schematic diagrams for explaining the operation of a head of the binding tool.

### DESCRIPTION OF THE PREFERRED EMBODIMENT

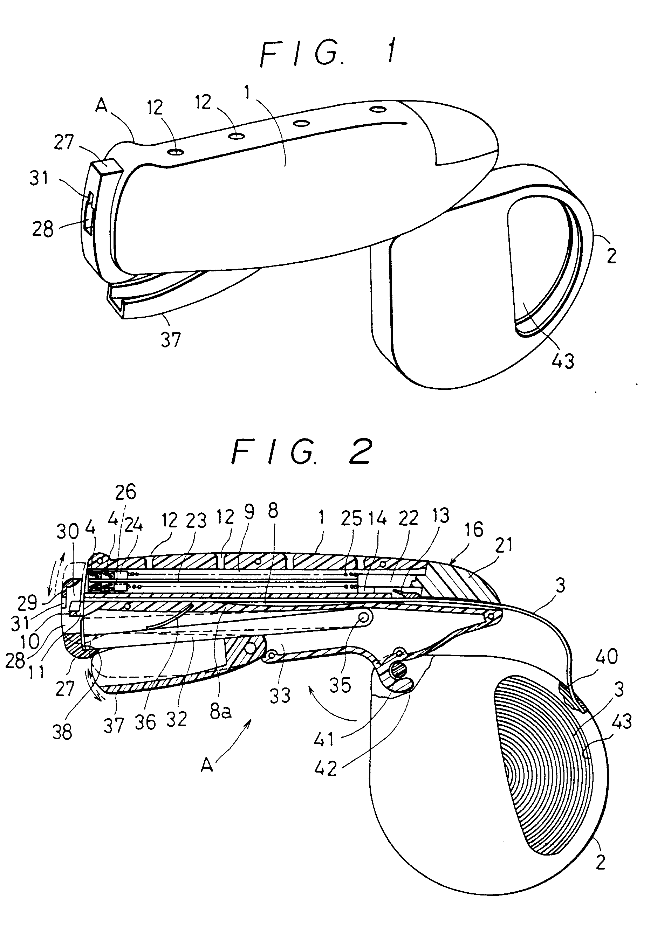

In Fig. 1 and 2 reference character A indicates generally the binding tool of the present invention, which comprises a tool body 1 containing fasteners and band case 2 containing a roll of band 3.

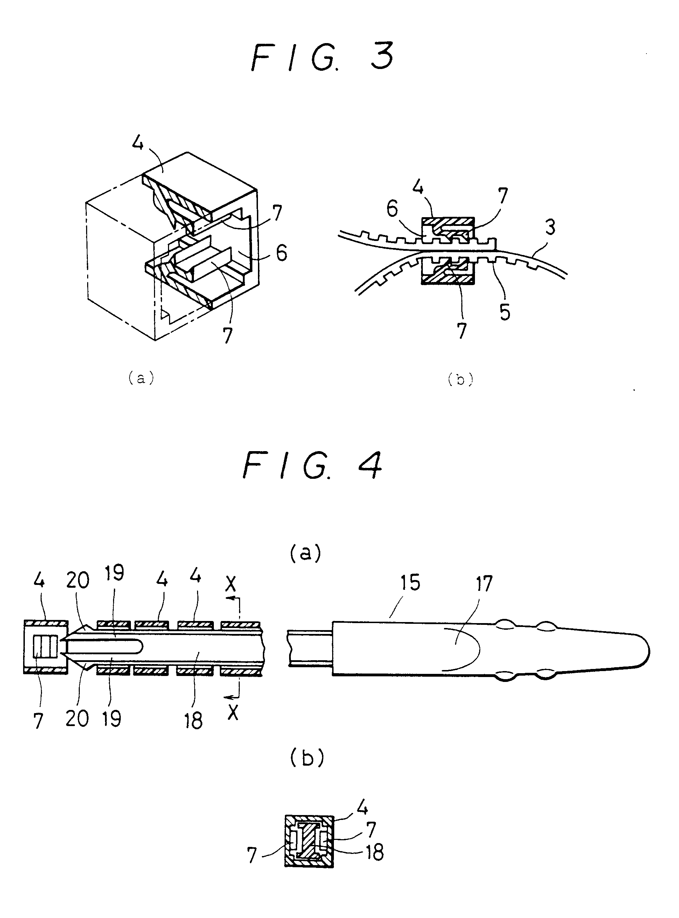

The band 3 has a structure similar to a rack; namely, it has projections and recesses (hereinafter referred to simply as teeth) 5 on one surface as shown in Fig. 3(b). The fastener 4 is a small sqare-sectioned member, which has a path 6 for the insertion therethrough of the band 3 and lugs or claws 7 protrusively provided on a pair of opposing inner walls in the middle for engagement with the teeth 5 of the band 3.

In the tool body 1 there are provided in parallel a passage 8 through which the band 3 drawn out of the band case 2 in passed from the rear end to the front end of the tool body 1 and a fastener feed path 9 for loading the fasteners 4 in alignment. The front open ends of the passage 8 and the path 9 are substantially flush with each other. The tool body 1 has at its front end a projecting piece 10 on the side opposite from the open end of the path 9 with respect to the open end of the passage 8. The projecting piece 10 has a slot 11 in its base.

The tool body 1 has a plurality of windows 12 formed above the fastener feed path 9 so that the fasteners 4 loaded therein can be seen partly or wholly from the outside. In the open rear end portion of the fastener feed path 9 there is provided a flexible stopper piece 13 for engagement with the outermost one of the fasteners loaded in the path 9. Further, there are formed grooves 14 in a pair of opposing side walls of the open rear lug portion of the path 9. The stopper piece 13 extends aslant into the path 9 and toward the direction in which the fasteners 4 are loaded into the path 9.

The fasteners 4 are loaded into the path 9 by use of fastener loading means 15 and are pushed forward by push means 16, see Fig 4.

The fastener loading means 15 has a stick portion 18 which extends from a grip 17 and has an H-letter cross-section and the front end of which has a fork end 19, each arm of the fork end 19 having a protrusion 20. When the fasteners 4 are put on the stick portion 18 of the loading means 15, they strike against the protrusions 20 of the fork end 19, but since the arms of the fork end 19 ar bent inward, the fasteners 4 can easily be put on the stick portion 18. In this instance, there is no fear of the lugs 7 of the fasteners 4 being damaged, since they are held out of contact with the stick portion 18 of the loading means 15.

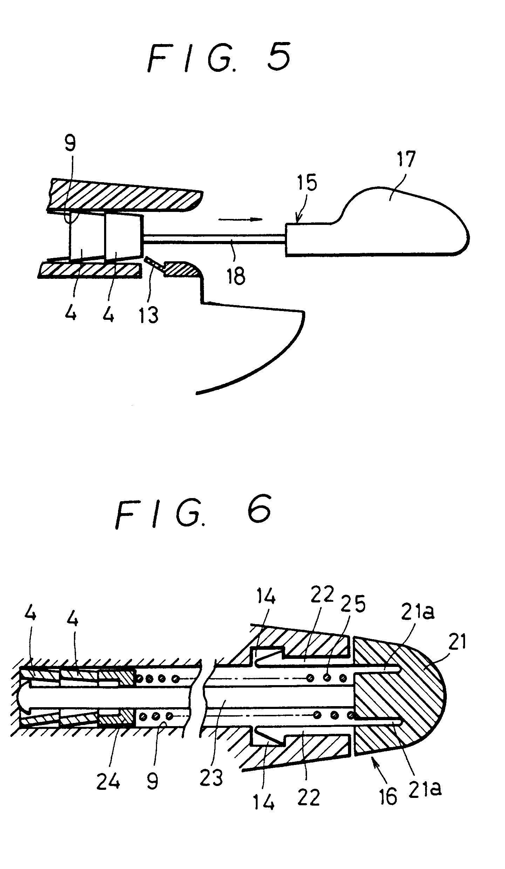

The fastener loading means 15 with the fasteners 4 thus mounted therein is inserted into the fastener feed path 9 through its rear open end over the entire length of the stick portion 18, after which the loading means 15 is pulled out of the fastener feed path 9 through the grip 17. In this case, the stick portion 18 is pulled out of the path 9, but no fasteners will fall out of the path 9 because the outermost fastener 4 is engaged with the stopper piece 13 provided at the rear open end of the path 9 as depicted in Fig. 5.

The fastener push means 16 is composed of a knob 21 having longitudinal grooves 21a, short locking pieces each extending from the knob 21 on the outside of one of the grooves 21a and a long push guide 23 also extending from the knob 21 centrally thereof between the grooves 21a as shown in Figs. 2 and 6. A push block 24 is slidably mounted on the push guide 23 and is always biased forward by a spring 25. The fastener push means 16 is inserted into the fastener feed path 9 from its rear open end after loading therein the fasteners 4. When the push means 16 is inserted into the fastener feed path 9, the push guide 23 passes through the fasteners 4 and the push block 24 engages the outermost fastener 4, and accordingly the spring 25 is compressed; further, the both locking pieces 22 are locked into the grooves 14 in the fastener feed path 9. Thus the push means 16 is held by the tool body 1. The push means 16 can easily be removed from the tool body 1 simply by pressing the knob 21 on the both sides thereof so that the locking pieces 22 are moved inward to disengage from the grooves 14. Incidentally, since the push block 24 has a relief 26 for preventing engagement with the stopper piece 13, the push means 16 can smoothly be pulled out of the fastener feed path 9.

The tool body 1 has a working head 27 which moves up and down along the front of the body 1. The head 27 is hollow and has an opening 28 in its front wall 29 centrally thereof. The front wall 29 of the head 27 just above the opening 28 forms on the inside thereof a fastener holding portion 30. The opening 28 is large enough to permit the passage therethrough of the fastener 4. In the center of the front wall 29 there is provide a U-shaped recess or groove 31 which is a little wider than the band 3 and directly contiguous to the opening 28.

The head 27 is mounted on the tip of an actuating arm 32, which is housed in a recess 33 formed under the band passage 8 of the tool body 8 and the rear end of which is pivotally secured, by a pin 35 to both side walls of the recess 33.

A return spring 36 is fixed at one end to the ceiling 8a of the recess 33, with the free end abutting against the upper face of the arm 32. A lever 37 is pivotally secured to the underside of the tool body 1, with the upper face of the former abutting against the underside of the arm 32. Accordingly, the working range of the arm 32 is limited by the lever 37 and the reurn spring 36, with the result that the head 27 is set to move up and down between a first position where the fastener holding portion 30 is aligned with the front end of the fastener feed path 9 (as indicated by the broken lines in Fig. 2) and a second position where the fastener holding portion is aligned with the front open end of the bond passage 8 (as indicated by the solid lines in Fig. 2).

The arm 32 further carries at its tip a vertically extending cutter 38 integrally formed with the head 27 in the back thereof. The cutter 38 is disposed so that as the head 27 is brought up from the above-mentioned second position toward the first position, the cutter also moves up through the slot 11 of the projecting piece 10 projectiong forwardly of the tool body 1 and across the front open end of the band passage 8 in association with the upward movement of the head 27.

The band case 2 has an opening 40 through which the band 3 is drawn out, and has at one end a coupling shaft 41 which extends thickwise of the case 2.

By engaging the shaft 41 with a curved engaging piece 42 provided on the underside of the tool body 1, the band case 2 is detachably mounted on the tool body 1 in a manner to be rotatable relative thereto over a certain angular range. Turning the band case 2 forward, the binding tool A becomes less bulky and can easily be packaged. Furthermore, the band case 2 has in its one side a relatively large opening 43, through which the band 3, when drawn out excessively from the case 2, can be drawn thereinto by manually winding it. The band case 2 is attached to the tool body 1 on the opposite side from the fastener feed path 9 with respect to the band passage 8.

Next, a description will be given how the binding tool A is used actually for tying up electric wies or the like in a bundle.

At first, the band 3 is drawn out of the case 2, inserted into the band passage 8 of the tool body 1 from the rear open end, and then pulled out of the passage 8 from the front open end thereof. On the other hand, the fasteners 4 are loaded into the fastener feed path 9 and the push means 16 is inserted thereinto as described previously. Thus the fasteners 4 are always pushed forward.

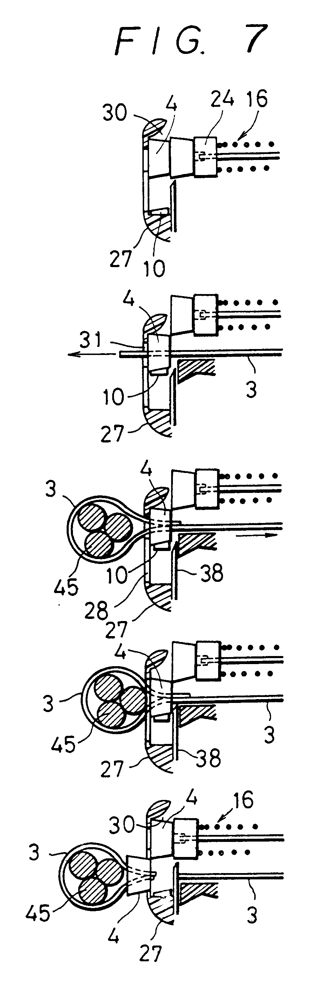

In the case of binding electric wire or the like 45 into a sheaf, the lever 37 is pressed upward with fingers to push up the arm 32 against the force of the return spring 36, moving the load 27 to the first position (see Fig. 7(a)). As a result of this, the fastener holding portion 30 of the head 27 is aligned with the front open end of the fastener feed path 9 and the first one of the fasteners 4, which are pused by the push means 16, pops into the fastener holding portion 30.

Then, releasing the lever 37, the arm 32 is lowered by the return spring 36 and the head 27 is also moved down to the second position where the fastener 4 held in the fastener holding portion is aligned with the front open end of the band passage 8 and held against the the projecting piece 10 (see Fig. 7(b)). Then, by pushing the band 3 forward through the band passage 8 from the rear open end thereof, the top end portion of the band 3 projects out forwardly of the head 27 after passing through the path 6 of the fastener 4 held in the head 27 and through the recess 31 of the fastener holding portion 30. In this case, the band 3 is guided by the passage 8 of the tool body 1 to travel along the center of the space defined between the claws 7 of the fastener 4 and the teeth 5 of the band 3 do not engage the claws 7; threrefore, the band 3 is fed out smoothly.

Following this, the projecting end portion of the band 3 is further pulled out by band, the band 3 thus drawn out is wound around the electric wires 45, and then the end portion of the band 3 is inserted again into the fastener 4 held in the fastener holding portion 30 of the head 27 (see Fig. 7(c)). Then, tightening the band 3 by pulling it backwardly of the tool body 1 between the rear open end of the band passage 8 and the band case 2, the teeth 5 of the band 3 are engaged with the claws 7 of the fastemer 4 as shown in Fig. 3(b), by which the electric wires 45 are tightly fastend together.

After this, when the lever 37 is brought up again to move the head 27 to the first position, the cutter 38 is also moved up, passing through the slot 11 in the base of the projecting piece 10 and across the front open end of the band passage 8. On the other band, since the fastener 4 is held in front of the front open end of the passage 8, the band 3 is cut off by the cutter 38 in the vicinity of the rear end face of the fastener 4 (see Fig. 7(d)). At this time, the fastener holding portion 30 lies at the second position where it is aligned with the fastener feed path 9, and accordingly the opening 28 of the head 27 is also in alignment with the band passage 8. Therefore, the fastener 4 fastening the both end portions of the band 3 together gets out of the inside of the head 27 through the opening 28 (see Fig. 7(e)). Thus one binding work is completed. Incidentally, since the head 27 is in the first position, the next fastener 4 is automatically fed into the head 27, making the binding tool A ready for the next binding.

As described above, according to the present invention, since the band passage 8 and the fastener feed path 9 are formed in parallel in the tool body 1 lengthwise thereof, the front end portion of the binding tool A is small. This permits easy visual inspection of thework to ensure acurate binding and allows ease in the work in a narrow space. Furthermore, since the front open ends of the band passage 8 and the fastener feed path 9 can be made almost flush with each other, the fastener 4 needs only to be moved between the first and second positions. This minimizes the distance of movement of the fastener 4; accordingly, the stroke of the head 27 is also small and the binding tool is easy to handle.

Moreover, the claws 7 of the fastener 4 are formed on the inside walls thereof, and hence are not readily affected by external force and are not likely to be deformed. This ensures firm and accurate engagement of the claws 7 with the teeth 5 of the band 3.

In addition, since the tool body 1 has formed therein the windows 12 just above the fastener feed path 9, it is possible to visually check how many fasteners 4 have been consumed.

Besides, since the stopper piece 13 is provided at the rear end of the fastener feed path 9, the fasteners 4 loaded in the tool body 1 do not come out therefrom but are safely held therein. Accordingly, the fasteners 4 can be loaded easily and safely.

Further, since the band case 2 is detachably mounted on the tool body 12, loading of the band 3 can easily be achieved by exchanging the band case 2. Since the band case 2 is attached to the tool body 1 on the opposite side from the fastener feed path 9 with respect to the band passage 8, the band 3 fed from the case 2 to the passage 8 does not hinder the loading of the fasteners 4. Even if the band 3 is excessively drawn out of the case 2, the excess band does not hinder the binding work because it can be drawn back into the case 2 by turning the roll of band 3 through the opening 43 formed in one side of the case 2.

## Claims

1. A binding tool comprising:
a tool body (1); and
a band case (2) containing a roll of band (3);
wherein the tool body (1) has formed therein in parallel and in the same direction a band passage (8) through which the band is passed and a fastener feed path (9) in which a plurality of fasteners (4)loaded thereinto from the rear open end thereof are contained in alignment;
- wherein the front face of the tool body (1) has formed therein an opening of a size large enough to permit the passage of the fastener therethrough; and a front open end of the band passage (8), said openings being flush with each other,
- wherein a working head (27) comprising a fastener holding portion (30) communicating with the opening of the fastener feed path (9) is provided in opposing relation to the front face of the tool body (1), the working head (27) being movable between a first position where the fastener holding portion (30) is aligned with the front open end of the fastener feed path (9) and the working (27) head holds in its fastener holding portion the fastener fed out of the front end portion of the fastener feed path (9) and a second position where the fastener held in the fastener holding portion is aligend with the front open end of the band passage (8), said working head (27) has an opening (28) in its front wail (29).
- wherein a cutter (38) is disposed in the vicinity of the working head, the cutter being movable across the front open end of the band passage in association with the working head (27) when the latter moves from the second position to the first position.

2. The binding tool of claim 1, wherein the tool body (1) has formed taherein a window (12) through which the fasteners loaded in the fastener feed path (9) can be seen partly or wholly from the outside.

3. The binding tool of claim 1, wherein a stopper piece (13) is provided in the rear open end portion of the fastener feed path (9), the stopper piece (13) extending aslant toward the direction of loading of the fasteners (4) and partly into the fastener feed path (9).

4. The binding tool of claim 1, wherein the band case (2) is detachably mounted on the tool body (1) on the opposite side from the fastener feed path (9) with respect to the band passage.

5. The binding tool of claim 5, wherein the band case (2) has an opening (43) on one side.

6. The combination of the binding tool of claim 1, with a band (3) and fastener (4) wherein the band has projections and recesses (5) on one surface, and the fasteners each have a through hole (6) for the insertion therethrough of the band and claws (7) protrusively provided on a pair of opposing inner wall in the middle for engagement with the projections and recesses of the band.

## Patentansprüche

1. Bindewerkzeug, umfassend:
einen Werkzeugkörper (1) und
ein Bandgehäuse (2), das eine Rolle eines Bandes (3) enthält,
wobei im Werkzeugkörper (1) parallel und in der selben Richtung ein Bandkanal (8), durch den das Band läuft, und ein Befestigerzulieferkanal (9), in dem mehrere in diesen vom hinteren offenen Ende desselben eingeführte Befestiger (4) in ausgerichteter Anordnung enthalten sind, ausgebildet sind,
- wobei in der Vorderseite des Werkzeugkörpers (1) eine Öffnung, die groß genug ist, um den Durchtritt der Befestiger zu erlauben, sowie ein vorderes offenes Ende des Bandkanales (8) ausgebildet sind und die Öffnungen in einer Ebene liegen,
- wobei ein Werkzeugkopf (27), der einen mit der Öffnung des Befestigerzulieferkanales (9) in Verbindung stehenden Befestigerhalteabschnitt (30) umfaßt, der Vorderfläche des Werkzeugkörpers (1) gegenüberliegend angeordnet ist und der Werkzeugkopf (27) zwischen einer ersten Stellung, in der der Befestigerhalteabschnitt (30) mit dem vorderen offenen Ende des Befestigerzulieferkanales (9) fluchtet und der Werkzeugkopf (27) in seinem Befestigerhalteabschnitt den aus dem vorderen Endabschnitt des Befestigerzulieferkanales (9) zugeführten Befestiger hält, und einer zweiten Stellung, in der der im Befestigerhalteabschnitt gehaltene Befestiger mit dem vorderen offenen Ende des Bandkanales (8) fluchtend ausgerichtet ist, bewegbar ist, und der werkzeugkopf (27) eine Öffnung (28) in seiner Vorderwand (29) aufweist,
- wobei eine Schneideinrichtung (38) in der Nähe des Werkzeugkopfes angeordnet ist und die Schneideinrichtung (38) in Verbindung mit dem Werkzeugkopf (27) quer über das vordere offene Ende des Bandkanales bewegbar ist, wenn der Werkzeugkopf sich aus der zweiten Stellung in die erste Stellung bewegt.

2. Bindewerkzeug nach Anspruch 1,
wobei im Werkzeugkörper (1) ein Fenster (12) ausgebildet ist, durch das die in den Befestigerzulieferkanal (9) eingeführten Befestiger teilweise oder in ihrer Gesamtheit von außen sichtbar sind.

3. Bindewerkzeug nach Anspruch 1,
wobei ein Stopper (13) im hinteren offenen Endabschnitt des Befestigerzulieferkanales (9) vorgesehen ist, der sich schräg zur Einführrichtung der Befestiger (4) und teilweise in den Befestigerzulieferkanal (9) erstreckt.

4. Bindewerkzeug nach Anspruch 1,
wobei das Bandgehäuse (2) abnehmbar am Werkzeugkörper (1) bezüglich dem Bandkanal an der dem Befestigerzulieferkanal (9) gegenüberliegenden Seite angebracht ist.

5. Bindewerkzeug nach Anspruch 5,
wobei das Bandgehäuse (2) an einer Seite eine Öffnung (43) aufweist.

6. Kombination des Bindewerkzeuges aus Anspruch 1 mit einem Band (3) und Befestigern (4),
wobei das Band an einer Oberfläche Vorsprünge und Vertiefungen (5) aufweist und die Befestiger jeweils eine Öffnung (6) zum Durchführen des Bandes und Klauen (7) aufweisen, die vorspringend an zwei gegenüberliegenden Innenwänden in der Mitte zum Eingriff mit den Vorsprüngen und Vertiefungen des Bandes vorgesehen sind.

## Revendications

1. Outil de cerclage comprenant :
un corps d'outil (1); et
un boîtier de ruban (2) contenant un rouleau de ruban (3);
dans lequel le corps d'outil (1) comporte, formés en son sein parallèlement et dans la même direction, un passage de ruban (8) par lequel le ruban est avancé et un trajet d'amenée d'attaches (9) dans lequel une pluralité d'attaches (4) chargées depuis l'extrémité ouverte arrière sont alignées;
dans lequel la face avant du corps d'outil (1) présente, formée en son sein, une ouverture d'une dimension suffisamment grande pour permettre le passage de l'attache; et une extrémité frontale ouverte du passage de ruban (8), lesdites ouvertures étant toutes au même niveau,
dans lequel une tête de travail (27) comprenant une partie de maintien d'attaches (30) communiquant avec l'ouverture du trajet d'amenée d'attaches (9) est disposée en regard de la face avant du corps d'outil (1), la tête de travail (27) étant mobile entre une première position où la partie de maintien d'attaches (30) est alignée avec l'extrémité frontale ouverte du trajet d'amenée d'attaches (9) et la tête de travail (27) retient dans sa partie de maintien d'attaches l'attache sortie de l'extrémité frontale du trajet d'amenée d'attaches (9) et une seconde position où l'attache retenue dans la partie de maintien d'attaches est alignée avec l'extrémité frontale ouverte du passage de ruban (8), ladite tête de travail (27) comporte une ouverture (28) dans sa paroi avant (29).
dans lequel une lame (38) est disposée au voisinage de la tête de travail, la lame étant mobile en travers de l'extrémité frontale ouverte du passage de ruban en association avec la tête de travail (27) lorsque cette dernière se déplace de la seconde position à la première position.

2. Outil de cerclage selon la revendication 1, dans lequel le corps d'outil (1) comporte en son sein une fenêtre (12) à travers laquelle les attaches chargées dans le trajet d'amenée d'attaches (9) sont visibles de l'extérieur, en partie ou en totalité.

3. Outil de cerclage selon la revendication 1, dans lequel une pièce d'arrêt (13) est disposée dans la partie d'extrémité ouverte arrière du trajet d'amenée d'attaches (9), la pièce d'arrêt (13) s'étendant obliquement dans la direction de chargement des attaches (4) et partiellement dans le trajet d'amenée d'attaches (9).

4. Outil de cerclage selon la revendication 1, dans lequel le boîtier de ruban (2) est monté de manière amovible sur le corps d'outil (1) sur le côté opposé à celui du trajet d'amenée d'attaches (9) relativement au passage de ruban.

5. Outil de cerclage selon la revendication 5, dans lequel le boîtier de ruban (2) comporte une ouverture (43) sur un côté.

6. Outil de cerclage combiné selon la revendication 1, avec un ruban (3) et des attaches (4), dans lequel le ruban comporte des saillies et des évidements (5) sur une surface, et les attaches comportent chacune un trou de passage (6) pour l'insertion en leur sein du ruban et des griffes (7) disposées en saillie sur une paire de parois internes opposées dans la partie médiane pour engagement avec les saillies et évidements du ruban.
